# EUROPÄISCHE PATENTSCHRIFT

(11) **EP 3 730 275 B1**
(45) Veröffentlichungstag und Bekanntmachung des Hinweises auf die Patenterteilung: **22.09.2021**
(21) Anmeldenummer: 20171396.3
(22) Anmeldetag: 24.04.2020
(51) Int. Cl.: B29C 45/54, B29C 45/47, B29C 45/60, B29C 45/18, B29C 45/00, B29B 7/90, B29C 45/46, B29B 7/42

(54) **VERFAHREN ZUR DIREKTCOMPOUNDIERUNG FASERVERSTÄRKTER VERBUNDWERKSTOFFE FÜR DAS HERSTELLEN VON KUNSTSTOFFFORMTEILEN UND DIREKTCOMPOUNDIERUNGSVORRICHTUNG**
METHOD FOR THE DIRECT COMPOUNDING OF FIBRE-REINFORCED COMPOSITE MATERIALS FOR THE PRODUCTION OF MOULDED PLASTIC PARTS AND DIRECT COMPOUNDING DEVICE
PROCÉDÉ DE COMPOUNDAGE DIRECT DES COMPOSITIONS RENFORCÉES PAR DES FIBRES POUR LA FABRICATION DE PIÈCES MOULÉES EN MATIÈRE PLASTIQUE ET DISPOSITIF DE COMPOUNDAGE DIRECT

(30) Priorität: 24.04.2019 EP 19170769; 07.06.2019 DE 202019103239 U
(43) Veröffentlichungstag der Anmeldung: 28.10.2020
(73) Patentinhaber: Arenz GmbH, 53340 Meckenheim (DE); Universität Paderborn Körperschaft des öffentl. Rechts, 33098 Paderborn (DE)
(72) Erfinder: Altendorf, Frank, 53359 Rheinbach (DE); Wittke, Marius, 33415 Verl (DE); Moritzer, Elmar, 33175 Bad Lippspringe (DE); Olbrich, Thomas, 53359 Rheinbach (DE)
(74) Vertreter: Tarvenkorn, Oliver

(56) Entgegenhaltungen:
- WO-A1-2006/039781
- WO-A1-2014/048666
- DE-A1- 10 201 869
- DE-A1-102013 212 167
- US-A1- 2017 312 954

## Beschreibung

Die Erfindung betrifft ein Verfahren zur Direktcompoundierung faserverstärkter Verbundwerkstoffe für die Herstellung von Kunststoffformteilen und -profilsträngen mit den Merkmalen des Oberbegriffs des Anspruchs 1 sowie eine Direktcompoundierungsvorrichtung dafür.

Zum Spritzgießen von Kunststoffformteilen kommen regelmäßig Spritzmodule zum Einsatz, die eine in einem Extruderzylinder rotierende Extruderschnecke umfassen. Der Innendurchmesser des Extruderzylinders entspricht dabei im Wesentlichen dem Außendurchmesser der Extruderschnecke. Im hinteren Bereich des Extruderzylinders ist ein Trichter zur Zuführung von Kunststoffgranulat angeordnet, in den das Kunststoffgranulat eingefüllt wird und durch eine Öffnung in den Extruderzylinder gelangt. Die Extruderschnecke wird von einem Antrieb in Rotation versetzt und fördert so das Kunststoffgranulat vorwärts. Dabei wird der Extruderzylinder mittels elektrischer Heizbänder von außen erwärmt. Durch die Erwärmung und die Schneckengeometrie wird der Kunststoff plastifiziert und homogenisiert. Am vorderen Ende des Extruderzylinders ist eine Düse angeordnet, die in ein Formwerkzeug mündet. Im Prozess wird die Formmasse durch eine an der Extruderschnecke angeordnete Rückstromsperre bis zur Düse transportiert und davor gestaut. Die Extruderschnecke wird dabei axial mit einem Staudruck beaufschlagt, wobei sie sich in Richtung des Einfülltrichters verschieben kann und sich so zwischen Rückstromsperre und Düse ein Vorraum bildet, in dem die Formmasse zum Einspritzen angestaut ist. Der Staudruck wirkt gegen die Schmelze, so dass diese verdichtet wird. Durch den Druck, den die Schmelze ausübt, wird die Extruderschnecke zurückbewegt. Beim Einspritzvorgang wird die Extruderschnecke sodann axial zur Düse hinbewegt, wobei sich die Rückstromsperre schließt und so die Kunststoffmasse durch die Düse in das Werkzeug gespritzt wird. Spritzgießvorrichtungen der vorgenannten Art sind beispielsweise in der DE 202 12 963 U1 beschrieben.

Zur Herstellung von Leichtbauteilen ist es bekannt, dem Kunststoffgranulat Additive wie Glasfasermaterial beizufügen. Dabei hat sich gezeigt, dass insbesondere durch den Einsatz von Langfasermaterial mit einer Faserlänge von etwa 10 mm bis 15 mm eine besonders hohe Zugfestigkeit bei gleichzeitig geringem Bauteilgewicht erzielbar ist.

In einem faserverstärkten Verbundwerkstoff werden Zugspannungen durch geeignete Verstärkungsfasern aufgenommen, um den Matrixwerkstoff, in den die Verstärkungsfasern eingebettet sind, zu entlasten. Dadurch sind wesentlich größere mechanische Festigkeiten erzielbar als bei unverstärkten Werkstoffen gleicher Art. Die Verstärkungsfasern, die meist aus Glas oder Carbon bestehen, werden in ein Fluid eingemischt, bei dem es sich entweder um den aufgeschmolzen thermoplastischen Matrixwerkstoff handelt oder um wenigstens eine von mehreren Reaktionskomponenten, die durch chemische Reaktion aushärtbar ist.

Für eine wirksame Verbesserung der mechanischen Festigkeit ist neben der Erhöhung der Faserlänge eine homogene Verteilung der Verstärkungsfasern notwendig, und die Verstärkungsfasern müssen möglichst lang ausgebildet sein. Es müssen sowohl Inhomogenitäten mit zu geringem Faseranteil wie auch Agglomerate von Fasern vermieden werden. Während bei Reaktionsharzen lange Faserbündel, -gewebe oder -matten ausgelegt werden können, bevor die Matrix gebildet wird, ist dies bei thermoplastischen Werkstoffen nicht möglich. Bei diesen bestehen große Schwierigkeiten, die Verstärkungsfasern in die thermoplastische Matrix einzubetten, weil einerseits eine homogene Verteilung nur durch Druck und/oder starkes Durchmischen und Kneten der Schmelze möglich ist, wodurch andererseits aber hohe Scherkräfte entstehen, die die eingemischten Verstärkungsfasern erheblich verkürzen und ggf. auch den Matrixwerkstoff schädigen. Somit besteht zwischen Homogenisierung einerseits und Materialschonung andererseits ein klassischer Zielkonflikt.

US 20170312954A1 beschreibt eine Spritzgießmaschine. Die Plastifizier-einheit besitzt neben einer Zuführung für Kunststoffgranulat am Anfang der Plastifizierschnecke eine weitere Zuführung in einem mittleren Bereich, wo Faserabschnitte in die Kunststoffschmelze eingemischt werden. Dort geraten die Faserabschnitte aber unmittelbar in den Einfluss der Stege der Plastifizierschnecke, für die sogar eine temporäre Umkehr der Drehrichtung vorgesehen ist, so dass es zu Faserverkürzungen kommt.

WO 2014048666A1 beschreibt eine weitere Spritzgießmaschine für faserverstärkte Kunststoffe. Ein Seitenaggregat ist vorgesehen, um Faserabschnitte herzustellen und mittels eines Paars von Schneckenwellen direkt in die Extruderbohrung der Spritzgießmaschine zu fördern.

Bei einer in WO 2006039781A1 beschriebenen Spritzgießmaschine sollen Faserabschnitte drucklos über eine Zuführöffnung zur Extruderbohrung zugegeben werden. Eine besondere Ausgestaltung der Schnecke im Einzugsbereich zusammen mit einem zusätzlichen Abstreiferelement im Gehäuse soll die Einmischung der Faser verbessern. Die Fasern werden dabei mechanisch belastet und können brechen.

In DE 102013212167A1 ist eine Vorrichtung zum Einbringen von Fasern in einen Extruder beschrieben. Die abgeschnittenen Fasern werden in einen Trichter gegeben und mittels eines Luftstroms zur Trichtermündung bewegt. Die konzentrierten Fasern werden von dort über eine Förderschnecke in die Bohrung eines Doppelschneckenextruders gefördert. Ausdrücklich sollen aber Kurfasern verwendet werden.

Die DE 10201869A1 beschreibt eine Aufgabevorrichtung für Kurzschnittfasern, die auf einer pneumatischen Förderung basiert. Eine Verarbeitung von Verstärkungsfasern mit größerer Faserlänge, um eine Festigkeitserhöhung bei den fertigen Kunststoffbauteilen zu erreichen, ist auch hierbei nicht vorgesehen.

Die Aufgabe der Erfindung besteht somit darin, ein Verfahren zur Direktcompoundierung faserverstärkter Verbundwerkstoffe anzugeben, durch welches eine thermoplastische Schmelze hergestellt wird, in der möglichst lange Verstärkungsfasern fein dispergiert vorliegen und die in einem sich anschließenden Spritzgieß- oder Extrusionsprozess inline verarbeitbar ist.

Diese Aufgabe wird durch ein Verfahren zur Direktcompoundierung faserverstärkter Verbundwerkstoffe mit den Merkmalen des Anspruchs 1 gelöst.

Erfindungswesentlich ist der Ansatz, die zur Einmischung in einen thermoplastischen Matrixwerkstoff bestimmten Verstärkungsfasern nicht einfach in einer losen Schüttung bereitzustellen, sondern daraus zunächst eine watteartige, gespinstförmige Konfiguration zu bilden.

Die Verstärkungsfasern werden durch das erfindungsgemäße Verfahren stark vereinzelt, wenn sie dem Verfahren als Bündel zugeführt werden, und/oder sie werden miteinander verfilzt, wenn sie bereits vereinzelt in den Prozess gelangt sind, so dass sie am Ende eine lockere, watteartige Konfiguration einnehmen, welche eine sehr geringe Schüttdichte besitzt. Dabei besitzen die Fasern untereinander eine leichte Verbindung, so dass die watteartige Konfiguration bei der weiteren Verarbeitung erhalten bleibt. Durch die Wattekonfiguration halten die Fasern untereinander einen Abstand, was lokalen Ansammlungen entgegenwirkt. Andererseits ist die Bindung untereinander nicht so stark, dass große Kräfte aufgebracht werden müssen, um Watteflocken aufzuteilen oder mehre Flocken voneinander zu trennen.

Dem erfindungsgemäßen Verfahren werden Verstärkungsfasern wie insbesondere Glasfasern vorzugsweise als Bündel zugeführt. Diese werden entweder vorher oder online zu Verfahrensbeginn auf eine bestimmte Länge gekürzt.

Insbesondere liegen die Verstärkungsfasern in geschnittenen Abschnitten von Bündeln vor, in Form sogenannter Rovings. Die Rovings werden bereits vor dem Beginn der Wattierung gekürzt, so dass für die Durchführung des Verfahrens abgeschlagene Rovingstücke, sogenannte *Chopped Strands,* eingesetzt werden.

Charakteristisch für die nach dem erfindungsgemäßen Verfahren hergestellte Verstärkungsfaser-Watte sind folgende beispielhafte Eigenschaften; diese sind jeweils im Vergleich mit den bevorzugt dem Verfahren zugeführten Faserbüscheln, insbesondere in Form der *Chopped Strands,* zu sehen:
- Die Schüttdichte ist um den Faktor 5 bis 20 reduziert;
- Die volumenspezifische Oberfläche ist um den Faktor 5 bis 50 erhöht;
- Die Faserlänge am Ende des Wattierungsprozesses ist lediglich um 0,5 bis 1,0 mm gegenüber der Faserlänge bei Aufgabe in den Prozess reduziert.

Die mit der Erfindung erzielbare watteartige Konfiguration der Verstärkungsfasern zeichnet sich außerdem dadurch aus, wie am Merkmal der Vergrößerung der volumenspezifischen Oberfläche zu sehen, dass die Öffnungen zwischen den Verstärkungsfasern so groß sind, dass sie nicht nur von niedrigviskosen Fluiden wie Wasser durchdrungen werden können. Sie können vielmehr auch von mittel- bis hochviskosen Fluiden wie einer thermoplastischen Kunststoffschmelze oder einem gelartig eingestellten Reaktionsharz drucklos, ggf. durch Kapillarwirkung, durchdrungen werden.

Die Faserlänge bei Aufgabe in den Wattierungsprozess ist unter folgenden Gesichtspunkten zu wählen:
- Eine sehr große Faserlänge von mehr als 5 Millimeter wäre für die Festigkeit eines daraus hergestellten faserverstärkten Verbundwerkstoffs zwar vorteilhaft. Andererseits müssen die Verstärkungsfasern, die über die Messerelemente oder andere rotierende Vereinzelungselemente vereinzelt werden, gut auflockerbar sein. Auch dürfen die internen Bindungen in der entstehenden Faserwatte nicht zu stark werden, damit eine Teilentnahme von Faserwattebauschen aus dem Pufferspeicher noch möglich ist.
- Zu kurze Verstärkungsfasern hingegen lassen sich nur schlecht zu einem watteartigen Gebilde verfilzen und bringen bei der Herstellung eines faserverstärkten Verbundwerkstoffs nicht die gewünschte Festigkeitssteigerung.

Unter diesen Gesichtspunkten hat sich eine mittlere Faserlänge der in der Watteform vorliegenden Verstärkungsfasern von 3 Millimetern bis 5 Millimetern als besonders geeignet erwiesen.

Nach der Erfindung wird eine extrem aufgelockerte Faserkonfiguration erhalten. Die wattierten Faserbüschel, die nach der Erfindung hergestellt sind, haben den Vorteil, fließfähig zu sein und kontinuierlich oder diskontinuierlich in eine Kunststoffschmelze, eingespeist werden zu können.

In dem Verfahren nach der Erfindung wird der thermoplastische Grundwerkstoff, der mit Additiven wie z. B. Farbstoffen, Pigmenten usw. versehen ist, in Granulatform bereitgestellt. Die Einmischung der Verstärkungsfaser-Watte in die thermoplastische Schmelze führt dann zu einem Gemisch aus nicht schmelzbaren Feststoffe, welche die Verstärkungsfasern und ggf. Pigmentpartikel. Dieses Gemisch wird hier als Compound bezeichnet, aus dem ggf. nach Durchlaufen weiterer Beimischstationen und Aufbereitungszonen am Ende der thermoplastische faserverstärkte Verbundwerkstoff erhalten wird, der in geschmolzener Form vorliegt. Eine direkte Injektion der in der beschriebenen Weise erzeugten Faserwatte in die in dem Extruder erzeugte, thermoplastische Schmelze ermöglicht eine sehr einfache und zugleich effektive Inline-Compoundierung eines faserverstärkten thermoplastischen Kunststoffs für die Kunststoffspritzgießverarbeitung wie für die Kunststoffprofilextrusion.

Die mit den Verstärkungsfasern und ggf. weiteren Additiven versehene, homogenisierte Kunststoffschmelze kann inline in einem bekannten Kunststoffspritzgießverfahren durch Injektion in ein Formnest in einem Werkzeug weiterverarbeitet werden.

Hierzu ist die Zuführeinheit der Faserwattierungsvorrichtung direkt seitlich an einen Extruder angeschlossen, in welchem der thermoplastische Kunststoff wie z. B. Polyamid zunächst aufgeschmolzen und homogenisiert wird. Nach der Homogenisierung wird der in der Schmelze bestehende Druck in einer Dekompressionszone nahezu vollständig abgebaut.

Die Auftragseinheit mündet genau dort in dem Extruder, wo sich die Dekompressionszone befindet. Die Dekompressionszone wird durch einen Abschnitt der Extruderschnecke, der gegenüber einem stromaufwärts gelegenen Schneckenabschnitt im Kerndurchmesser - bei konstantem Schneckenstegdurchmesser - reduziert ist. Bei gleichzeitig konstantem Bohrungsdurchmesser im Extrudergehäuse liegt in der Dekompressionszone somit eine deutliche Vergrößerung des durchströmbaren Volumens vor. Dadurch kann einerseits die Schmelze entspannen und andererseits sind die Schneckengänge in der Dekompressionszone nur teilgefüllt, sodass die wattierten Faserbüschel direkt in die an dieser Stelle drucklos oder nahezu drucklos vorliegende Kunststoffschmelze eingemischt werden können.

Aufgrund der bereits beschriebenen großen Hohlräume und Öffnungen zwischen den Verstärkungsfasern kann die Schmelze zudem drucklos in die wattierten Faserbüschel einfließen. Anschaulich gesprochen besitzen die Faserbüschel also eine gewisse Saugfähigkeit, welche die problemlose Benetzung durch den flüssigen Kunststoff ermöglicht, sodass bei der Inline-Compoundierung unter Anwendung des erfindungsgemäßen Wattierungsverfahrens ein faserverstärkter Kunststoff erhalten wird, bei dem die Faserlängen noch so vorliegen, wie sie in der Faserwattierungsvorrichtung hergestellt wurden. Durch die drucklose Einspeisung der Verstärkungsfasern in die Kunststoffschmelze wird eine Beschädigung in Form einer Faserverkürzung vermieden. Außerdem wird Antriebsleistung in der Zuführeinheit eingespart. Die direkt an den Extruder angeschlossene Zuführeinheit der Faserwattierungsvorrichtung wird zwar nach Art einer Stopfschnecke benutzt, wobei jedoch ein Stopfen, im Sinne eines Nachschiebens unter Kraftaufwand, nicht stattzufinden braucht.

Die Verbindung des Extruders mit sequenziell und diskontinuierlich arbeitenden Kolbenspritzeinheiten über eine Massestromregelung, die nicht nur innerhalb der Faserwattierungsvorrichtung zur Erzeugung des Additiv-Vorprodukts vorgenommen wird, sondern darüber hinaus auch die Faser- Wattierung im Seitenaggregat mit der Plastifizierung des Matrixkunststoffs im Extrudermodul verbindet, wird ein kontinuierlich ausgestoßener Massestrom erzeugt. Der besondere Vorteil des erfindungsgemäßen Verfahrens besteht also nicht allein darin, dass die mechanischen Eigenschaften des inline produzierten Bauteils durch eine erhöhte Faserlänge und gleichmäßige Faserverteilung wie auch durch die Inline-Weiterverarbeitung ohne Schädigung der eingemischten Verstärkungsfasern deutlich verbessert sind, sondern auch, dass das kontinuierlich hergestellte Compound hinsichtlich Faserlänge, Fasermassenanteil und Faserverteilung mit engen Toleranzen herstellbar und jederzeit reproduzierbar ist.

Die Zuführung von wattierten Glasfasern führt pro eingetragener Energie zu besseren mechanischen Eigenschaften als sie mit konventionellen Glasfasern per Direktcompoundierung zu erreichen sind. Hochviskosere Matrixmaterialien können ohne oder mit weniger Dispergiermittel verarbeitet werden, niedrigviskose Schmelzen erreichen durch den reduzierten Energieeintrag längere Fasern im Bauteil und damit bessere Eigenschaften.

Da die Verstärkungsfaserwatte im Zuge einer Inline-Compoundierung gebildet wird, ist es vorteilhaft, die Verstärkungsfasern vor der Wattierung und/oder die hergestellte Verstärkungsfaserwatte vor dem Einmischen in die Matrix zu erwärmen. Durch Einspeisung von auf Schmelzetemperatur erwärmten Fasern wird das lokale Einfrieren der Schmelze beim Kontakt mit der Verstärkungsfaserwatte vermieden. Dadurch wird sichergestellt, dass der Matrixwerkstoff vollständig in die Verstärkungsfaserwatte hineinfließt und diese nicht als Faserbüschel mit Lufteinschlüssen umhüllt. Für die Vorerwärmung kann beispielsweise ein beheizbarer Trichter verwendet werden.

In weiterer Ausgestaltung der Erfindung wird das Additiv, insbesondere ein Glasfasermaterial oder ein Flammschutzmittel, unter Zugabe eines Inertgases, vorzugsweise Stickstoff, in den Extruderzylinder gefördert. Hierdurch ist ein Extrusionsprozess unter Ausschluss von Sauerstoff ermöglicht, wodurch einer Zersetzung der thermoplastischen Schmelze, insbesondere Polyamid, entgegengewirkt ist.

Durch eine mit Überdruck-Stickstoff geflutete teilgefüllte Zone wird im Extrudermodul eine Inertatmosphäre zur Vermeidung der Oxidation von Polykondensaten erzeugt. Der Stickstoff wird per Überdruck konvektiv zugeführt, erwärmt sich und erzeugt somit eine konvektive Walze in der teilgefüllten Zone. Im Polykondensat enthaltenes Wasser wird als Dampf aufgenommen und abgeführt, wodurch die Vortrocknungszeit von Polykondensaten verringert werden kann.

Bei solchen Matrixkunststoffen können zur Entwässerung der Schmelze vor der Dekompressionszone eine Entgasungszone und eine Vakuumpumpe vorgesehen sein. Auch dies kann die Vortrocknungszeit reduzieren.

Mit der Erfindung kann eine Vorrichtung zum Spritzgießen von Faserverbundkunststoffformteilen bereitgestellt werden, die eine homogene Verteilung zugegebener Additive in der Kunststoffmasse bei gleichzeitiger Schonung der Additive im Prozesse aufweist und die als Doppelschnecke ausgeführt ist, deren Schnecken mit einem Getriebe verbunden sind. Dabei erfolgt die Desagglomeration des Additivs bereits während der Förderung und vor der Zugabe zur Kunststoffmasse, wodurch Reibungs- und Scherprozesse zwischen Kunststoffmaterial und Additiv vermieden sind. Zudem hat sich gezeigt, dass durch die trockene Desagglomeration außerhalb der Kunststoffmatrix ein Aufspleißen der Additive bewirkt ist, ohne diese jedoch zu zerstören.

Das desagglomerierte Additiv kann unmittelbar nach dessen Aufgabe homogen mit der Kunststoffmasse vermischt werden. Bevorzugt sind die Schnecken der Doppelschnecke über das Getriebe gleichsinnig drehend antreibbar. Besonders bevorzugt weist die Doppelschnecke eine dichtkämmende Schneckenanordnung mit engem Scherspalt auf.

In Weiterbildung der Erfindung sind die Schnecken der Doppelschnecke wechselbar mit dem Getriebe verbunden. Hierdurch ist eine einfache Einstellung des Scherspaltes der Doppelschnecke im Hinblick auf den Grad der Aufspleißung des Additivs ermöglicht.

In Ausgestaltung der Erfindung ist die Doppelschnecke in einem Kanal mit achtförmigem Querschnitt angeordnet. Hierdurch ist eine spiralförmige Bewegung der Kunststoffmasse entlang der achtförmigen Zylinderwand erzielt.

In weiterer Ausgestaltung der Erfindung nimmt der Kanal einen wechselbaren Einsatz mit achtförmigem Querschnitt auf. Hierdurch ist eine einfache Anpassung des Kanals auf die jeweils eingesetzten Doppelschnecken ermöglicht.

In Weiterbildung der Erfindung weisen die Schnecken der Doppelschnecke ein Verhältnis der Schneckenlänge zum Schneckendurchmesser von 25 bis 30 auf. Hierdurch ist ein hoher Desagglomerationsgrad erzielt.

In Ausgestaltung der Erfindung ist die Zuführeinrichtung im Bereich der Dekompressionszone gasdicht mit dem Extruderzylinder verbunden. Hierdurch ist ein Sauerstoffeintrag in die Kunststoffmasse vermieden. Insbesondere bei der Extrusion von Polyamid führt ein Sauerstoffeintrag zur Zersetzung des Kunststoffmaterials, wodurch Qualitätseinbußen bewirkt sind.

In Weiterbildung der Erfindung ist die Zuführeinrichtung mit einem Inertgaseinlass versehen, der bevorzugt nahe der Mündung der Zuführeinrichtung in den Extruderzylinder angeordnet ist. Hierdurch ist ein Extrusionsprozess unter Sauerstoffausschluss ermöglicht, wodurch einer Zersetzung des Kunststoffmaterials weiter entgegengewirkt ist.

In Ausgestaltung der Erfindung ist wenigstens eine Dosiervorrichtung angeordnet, die gasdicht mit der Zuführeinrichtung verbunden ist. Hierdurch ist einem Sauerstoffeintrag in den Extrusionsprozess weiter entgegengewirkt.

In weiterer Ausgestaltung der Erfindung weist die Zuführeinrichtung einen beheizbaren Zylinder auf, in dem die Schnecken der als Doppelschnecke ausgebildeten Fördereinrichtung (Doppelförderschnecke) angeordnet ist. Hierdurch ist eine Temperierung des Additivs vor dem Eintrag in die Kunststoffmatrix ermöglicht.

Bevorzugt ist die Zuführeinrichtung Bestandteil eines Seitenaggregats, das orthogonal zum Extruderzylinder angeordnet ist. In weiterer Ausgestaltung der Erfindung ist die Extruderschnecke als Sechszonenschnecke ausgebildet, deren Plastifizierungsbereich die Geometrie einer Barriereschnecke oder einer konventionellen Dreizonenschnecke aufweist, wobei das Verhältnis von Gangsteigung zu Durchmesser im Falle der konventionellen Dreizonenschnecke bevorzugt gleich 1 ist.

Die Ausbildung des Plastifizierungsbereichs in Art einer Barriereschnecke bewirkt eine erhöhte Aufschmelzleistung pro Drehzahl. Hierdurch kann die Länge der Extruderschnecke minimiert werden, wodurch eine Verkürzung des Extrusionsprozesses bewirkt ist. Insbesondere Polyamid, das viel Wärme zum Aufschmelzen benötigt, darf nicht zu lange erhitzt werden, da sonst Qualitätseinbußen die Folge sind.

Eine zur Durchführung des Verfahrens geeignete Faserwattierungsvorrichtung ist in Anspruch 8 angegeben.

Ein "Trichterelement" im Sinne der vorliegenden Erfindung ist dabei jedes Aufgabebehältnis, das wenigstens eine Öffnung an der Unterseite aufweist und hinsichtlich seiner Formgebung so gestaltet ist, dass die darin aufgegebenen Verstärkungsfasern in diese Öffnung rutschen oder fallen können. Neben konischen Trichterformen mit rundem Querschnitt sind auch Pyramiden- oder Keilformen denkbar.

Ein "Messerelement" ist nach der Erfindung ein rotierendes Element, das radial von einer Antriebswelle abstehende, flach ausgebildete Elemente aufweist. Diese Elemente benötigen nur dann geschärfte Klingen, wenn beim Übergang der Verstärkungsfasern aus dem Trichterelement in die Mühleinheit auch eine Faserkürzung vorgenommen werden soll. Sofern die aufgegebenen Verstärkungsfasern oder Bündel davon schon vorgeschnitten aufgegeben werden, besteht der Hauptzweck des Messerelements in der Vereinzelung. wozu nicht unbedingt scharfe Messerklingen erforderlich sind.

Der nach einer vorteilhaften Ausführungsform vorgesehene Luftstrom übt eine Kraft auf die im Pufferspeicher vorliegende Faserwatte aus und ermöglicht deren komplette Entnahme aus dem Pufferspeicher. Insbesondere ermöglicht der Luftstrom, das watteartige Faserbüschel in Teilportionen zu teilen. Der Sperrschieber, der den Pufferspeicher nach unten verschließt, braucht nur teilgeöffnet werden, um einen Teil der Faserwatte mittels des Luftstroms aus dem Pufferspeicher abzugeben. Ein weiterer Anteil verbleibt im Pufferspeicher, so dass alle aus der Mühleneinheit neu abgegebenen Verstärkungsfasern bzw. Faserbüschel direkt daran andocken können. Der einmal initiierte Wattierungs- und Verfilzungsprozess kann also stetig fortgesetzt werden, und es braucht nach der Entnahme nicht erst eine erneute Wattierung im Pufferspeicher abgewartet zu werden.

Besonders vorteilhaft ist es, wenn unterhalb einer Austragsöffnung des Pufferspeichers ein Austragskanal angeordnet ist, durch welchen hindurch ein saugender Luftstrom auf die Austragsöffnung des Pufferspeichers wirkt.

Der Austrag der Faserwatte aus der Zuführeinheit kann über einen Stopfkolben erfolgen, sofern eine Zwischenlagerung und/oder Verpackung vorgesehen ist.

Für eine kontinuierliche Weiterverarbeitung ist es vorteilhaft, eine Zuführeinheit mit wenigstens einer Schneckenwelle vorzusehen, insbesondere eine Zuführeinheit mit einem Paar gleichsinnig rotierender Stopfschneckenwellen. Hierdurch werden die hergestellten Faserbüschel in die Länge gezogen und der Ausstoß vergleichmäßigt.

Vorzugsweise ist wenigstens ein innerhalb des Pufferspeichers rotierendes Rührelement vorgesehen. Durch dieses werden die Verstärkungsfasern auf dem Einzugsspalt zwischen den gleichsinnig rotierenden Stopfschneckenwellen verteilt und dadurch besser eingezogen. Ferner kann nach einer initialen Erzeugung der Watte durch einen gegenüber dem Messer wesentlich reduzierten Schereintrag, beispielsweise durch ein zusätzliches Rührerelement, eine weitergehende Wattierung der Fasern erreicht werden.

Die erfindungsgemäße Vorrichtung hat außerdem den Vorteil, dass kontinuierliche und diskontinuierliche Teilprozesse so aufeinander abgestimmt werden können, dass ein kontinuierlicher Austrag von Faserbüscheln möglich ist. Der diskontinuierliche Teilprozess, der das Vereinzeln und Ansammeln einer ausreichenden Mange an Verstärkungsfasern im Pufferspeicher umfasst, wird mit dem Austrag über den motorisch gesteuerten Sperrschieber so gekoppelt, dass eine fortlaufende Abgabe einzelner wattierter Faserbüschel möglich ist. Insbesondere werden die Drehzahl des Schneidmessers und die Drehzahl der Stopfschneckenwellen sowie die Hubfrequenz des Stopfkolbens in Abhängigkeit von dem am Trichter gemessenen Masseverlust an aufgegeben Verstärkungsfasern geregelt. Hierfür wird gravimetrisch der Massenstrom der anfangs aufgegebenen Fasern sowie der durch die Schneckenwelle weggeförderten wattierten Fasern gemessen. Zum Einsatz kommt dabei Beispielsweise die konventionelle "Loss-in-weight" Technologie. Für den Gesamtprozess ist dabei die Kopplung dieser beiden Massenströme durch den Puffer besonders vorteilhaft. Seine Füllhöhe wird durch Öffnungsamplitude und -frequenz festgelegt. Die Füllhöhe kann mit Hilfe optischer Systeme oder mit Hilfe einer dritten Waage konstant gehalten werden, in dem während der Kalibrierung Öffnungsamplitude und -frequenz entsprechend angepasst werden.

Andere Weiterbildungen und Ausgestaltungen der Erfindung sind in den übrigen Unteransprüchen angegeben. Ein Ausführungsbeispiel ist in den Zeichnungen dargestellt und wird nachfolgend im Einzelnen beschrieben. Es zeigen:
- Figur 1: eine Spritzgießanlage zum Spritzgießen von Faserverbundkunststoffformteilen in Ansicht von oben;
- Figur 2: die Spritzgießanlage aus Figur 1 in seitlicher Ansicht;
- Figur 3: eine schematische Schnittdarstellung einer Direktcompoundierungsvorrichtung;
- Figur 4: eine schematische Darstellung der Extruderschnecke der Direktcompound ierungsvorrichtung;
- Figur 5: eine schematische Darstellung einer Zuführeinrichtung in Ansicht von vorn;
- Figur 6: eine Faserwattierungsvorrichtung im Schnitt;
- Figur 7: eine Ausschnittsvergrößerung aus Figur 6;

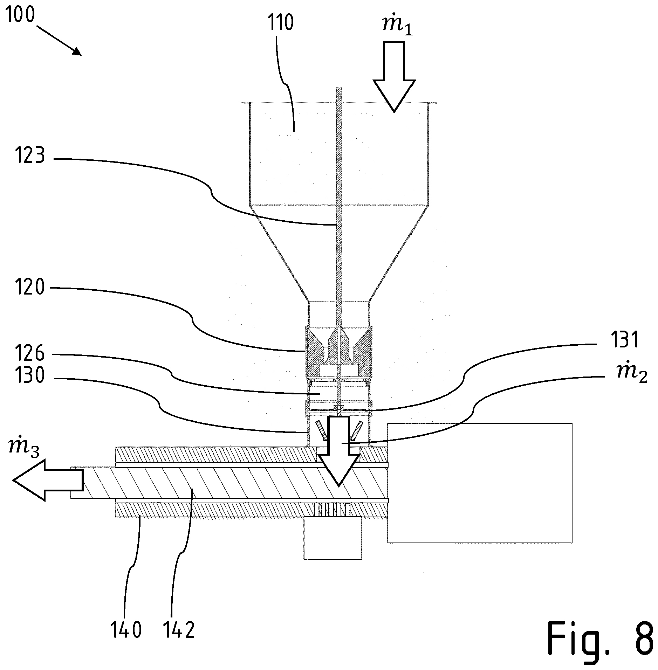

- Figur 8: die Massenströme in der Faserwattierungsvorrichtung in schematischer Ansicht und
- Figur 9: einen Druckverlauf im Extrudermodul, aufgetragen über der Länge der Extruderschnecke.

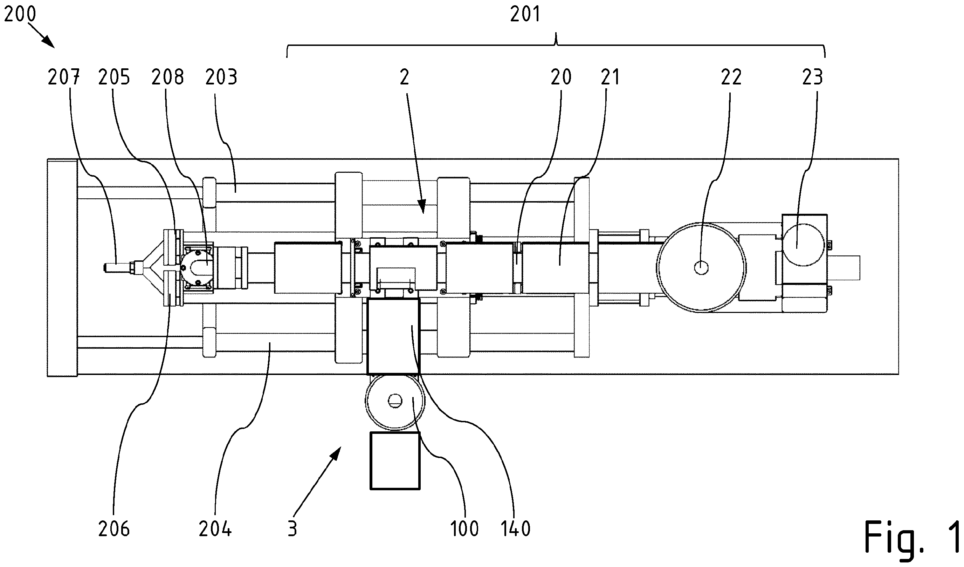

Figur 1 zeigt eine komplette Spritzgießanlage 200. Darin ist eine Direktcompoundierungsvorrichtung 201 integriert; diese besteht im Wesentlichen aus einem Extrudermodul 2, das mit einem Seitenaggregat 3 versehen ist, welches eine Zuführeinrichtung 140 und eine Faserwattierungsvorrichtung 100 umfasst.

Das Extrudermodul 2 umfasst einen Extrusionszylinder 20, in dem eine Extruderschnecke über einen Antrieb 23 rotierbar angeordnet ist. Der Extrusionszylinder 20 ist außen umlaufend mit Heizbändern 21 versehen, deren Heizleistung durch in den Mantel des Extrusionszylinders 20 integrierte Heizwendeln noch verstärkt wird. Endseitig ist an dem Extrusionszylinder 2 ein Einfülltrichter 22 angeordnet, der in dem Extrusionsraum des Extrusionszylinders 20 mündet und der der Zuführung von plastifizierbarem Kunststoffgranulat dient.

An dem Seitenaggregat 3 ist eine Faserwattierungsvorrichtung 100 zur Erzeugung einer besonders aufgelockerten Konfiguration der Verstärkungsfasern zwecks späterer dosierter Abgabe in angeordnet. An dem Seitenaggregat 3 können auch zusätzliche Dosiereinrichtungen für weitere Additive angeordnet sein, beispielsweise für die Zuführung von Flammschutzmitteln.

Die Spritzgießanlage 200 umfasst neben der Direktcompoundierungsvorrichtung 201 zwei Kolbenspritzeinheiten 203, 204, die wechselweise über eine Einspritzdüse 207 mit einem Formwerkzeug zu verbinden sind. Die in der Direktcompoundierungsvorrichtung 201 aufbereitete Schmelze kann abwechselnd über je eine der beiden Kolbenspritzeinheiten 203, 204 der Düse 207 zugeführt werden. Dazu sind mehrere Absperr- und Umschaltventile 205, 206, 207 vorgesehen, die folgende Funktionen ermöglichen:
- Wechselweise Verbindung der Kolbenspritzeinheiten 203, 204 mit der Düse 207;
- Absperrung der Verbindung der jeweils einspritzenden Kolbenspritzeinheiten 203, 204 mit der Direktcompoundierungsvorrichtung 201 und
- gleichzeitige Verbindung der jeweils anderen Kolbenspritzeinheit 203, 204 mit der Direktcompoundierungsvorrichtung 201 zwecks Aufnahme von fertig aufbereitetem Compound.

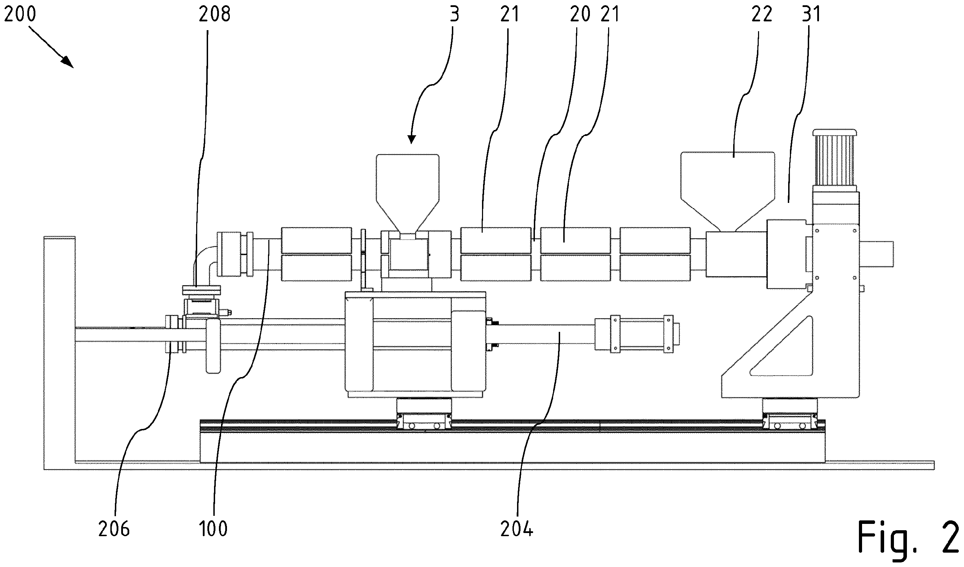

Die seitliche Ansicht der Spritzgießanlage 200 in Figur 2 zeigt die Lage der Direktcompoundierungsvorrichtung 201 im oberen Bereich und der darunter angeordneten Kolbenspritzeinheiten 203, 204.

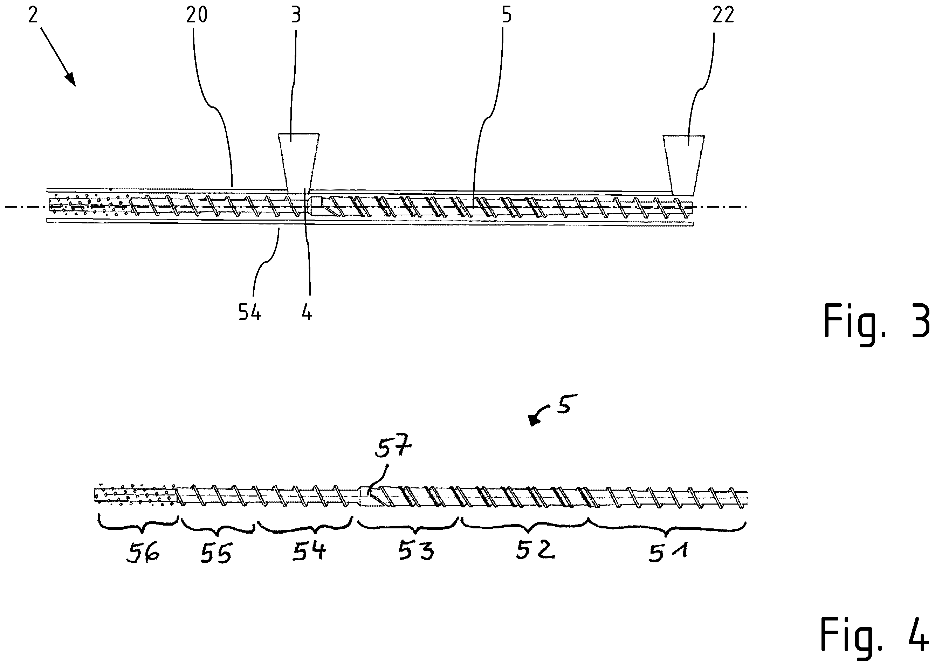

Wie die schematische Darstellung des Extrudermoduls 2 in Figur 3 zeigt, ist dieses als Einschneckenextruder ausgebildet und umfasst den Extrusionszylinder 20, in dem die rotierbar angetriebene Extruderschnecke 5 angeordnet ist. Der erste Abschnitt zwischen dem Einfülltrichter 22 und dem Seitenaggregat 3 dient dazu, Kunststoffgranulat einzuziehen, unter der Einwirkung von Druck, Scherung und Temperatur zu plastifizieren und bis kurz vor der Mündung des Seitenaggregats 3 durch Druckaufbau zu homogenisieren. Unmittelbar vor einer Einmündung 4 des Seitenaggregats 2 ist an der Extruderschneckenwelle ein sprunghaft reduzierter Kerndurchmesser bzw. eine sprunghaft vergrößerte Gangtiefe vorgesehen, so dass dort eine Dekompressionszone 54 ausgebildet wird.

Die Extruderschnecke 5 ist in Figur 4 in Alleinstellung dargestellt. Sie weist im Ausführungsbeispiel eine Länge auf, die das 30-fache bis 36-fache ihres Durchmessers, also 30D bis 36D beträgt. Die Schneckengeometrie der Extruderschnecke 5 weist in dem dargestellten Ausführungsbeispiel insgesamt sechs Zonen auf, wobei der erste Schneckenabschnitt entsprechend der Schneckengeometrie einer konventionellen Dreizonenschnecke eine Einzugszone 51, eine Kompressionszone 52 und eine Meteringzone 53 aufweist. Hieran schließt sich der zweite Schneckenabschnitt mit einer durchmesserreduzierten Dekompressionszone 54 mit anschließender Meteringzone 55 an, gefolgt von einer wendelfreien Homogenisierungszone 56.

Im Ausführungsbeispiel ist die Extruderschnecke 5 als Barriereschnecke ausgebildet, wobei im Bereich der Kompressionszone 52 ein zusätzlicher

Barrieresteg eingefügt ist, der den Feststoff von der Schmelze trennt. Durch den Barrieresteg wird der Austritt von nicht aufgeschmolzenen Kunststoffpartikeln aus der Kompressionszone 52 verhindert, wodurch eine gut aufgeschlossene Kunststoffschmelze gewährleistet ist.

Die ersten beiden Drittel der Extruderschnecke 5 mit einer Länge von 20D bis 24D dienen zum Plastifizieren des Kunststoffgranulats. Das vordere Drittel der Schnecke mit den Zonen 55 und 56 dient zur Aufnahme der Additive und zur Homogenisierung und Komprimierung derselben. Die in diesem Bereich durchgeführte Kompression ist erforderlich, um etwaige Werkzeugwiderstände eines angeschlossenen Prozesses, z. B. beim nachgeschalteten Kunststoffspritzgießen, überfahren zu können. Die Homogenisierung ist notwendig, um eine konstante und hochwertige Schmelzqualität zu erzeugen.

Alternativ kann die Extruderschnecke 5 auch im Bereich der ersten drei Zonen in Art einer konventionellen Dreizonenschnecke mit einem Verhältnis von Gangsteigung zu Durchmesser von 1 für eine optimale Förderwirkung ausgebildet sein.

Im Übergang vom ersten Schneckenabschnitt zum zweiten Schneckenabschnitt befindet sich ein Scherteil 57. Das Scherteil 57 dient der Desagglomeration letzter Feststoffreste. Im Anschluss an das Scherteil 57 nimmt die Schneckentiefe signifikant zu, um die Dekompressionszone 54 auszubilden und darin eine Teilfüllung der Schneckengänge zu erreichen.

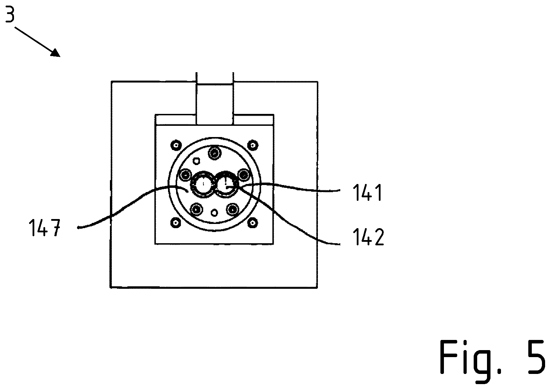

Figur 5 zeigt das Seitenaggregat 3 von der Mündungsseite am Extruder her. Es umfasst ein Flanschteil 147, mit dem es im Bereich der Dekompressionszone gasdicht am Extruderzylinder angebracht ist. Das Flanschteil 147 besitzt eine Ausnehmung in gleicher Form und Größe wie ein dahinter liegender Zuführkanal. Dieser ist als Doppelschneckenkanal mit achtförmigem Querschnitt für zwei Schneckenwellen 142 ausgebildet. Im Ausführungsbeispiel ist das Gehäuse des Seitenaggregats 3 beheizbar ausgeführt.

Im Bereich der Mündung der Zuführeinrichtung 2 im Extruderzylinder ist an dem Zuführzylinder 31 ein Inertgaseinlass angeordnet, an den eine Inertgasquelle, insbesondere eine Stickstoffquelle anschließbar ist. Das Flanschteil 147 ist über eine keramische Dichtung gegenüber dem Extruderzylinder 20 gasdicht abgedichtet.

Um den Doppelschneckenkanal an die einzusetzende Doppelförderschneckenanordnung anzupassen, ist ein wechselbarer Einsatz 148 mit achtförmigem Querschnitt eingesetzt, wie in Figur 5 gezeigt. Durch die Verwendung unterschiedlicher wechselbarer Einsätze 148 sind verschiedene Abstände der Achsen der Schneckenwellen 142 realisierbar. Im Ausführungsbeispiel sind die beiden Schneckenwellen 142 einer dichtkämmenden Doppelförderschneckenanordnung mit engem Scherspalt in den Einsatz 34 eingebracht. Durch die wechselbare Anordnung der Doppelförderschneckenanordnung ist auch der wahlweise Einsatz einer tangierenden Schneckengeometrie anstelle einer dichtkämmenden Schneckengeometrie möglich.

Die Schneckenwellen 142 sind durch das Flanschteil 147 geführt und münden in einer hierfür in dem Extruderzylinder vorgesehenen Einlassöffnung. Im Ausführungsbeispiel weisen die Schneckenwellen 142 der Doppelförderschneckenanordnung der Zuführeinheit 140 ein Verhältnis der Schneckenlänge zum Schneckendurchmesser von 27 auf.

Vorn in der Zuführeinheit ist im Ausführungsbeispiel ein nicht dargestellter Drucksensor angeordnet, der mit einer Steuerung des Extrudermoduls 2 verbunden ist. Der Drucksensor wird genutzt, um im Falle eines Flutens des Extruderzylinders 20 bei zu hohem Gegendruck eine Notabschaltung auszulösen. Die Beheizung des Zuführzylinders des Seitenaggregats 3 verhindert ein Verstopfen der Doppelschneckenanordnung durch Erstarren eintretender Schmelze aus dem Einschneckenextruder.

Um dem möglichen Rückfluten von Kunststoffschmelze in den Zuführkanal im Seitenaggregat 3 entgegen zu wirken, enthält die

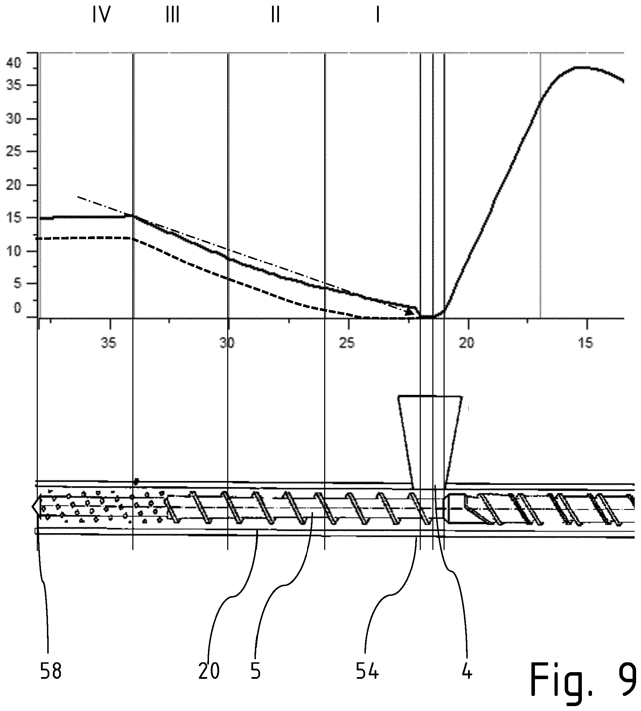

Direktcompoundierungsvorrichtung 201 ferner Drucksensoren im Extruderzylinder zur Messung des Schmelzedrucks, insbesondere ab Beginn der teilgefüllten Zone bis zur Schneckenspitze, und zwar in mindestens zwei, vorzugsweise vier Stellen in diesem Längenbereich. Der sich daraus ergebende Druckverlauf ist exemplarisch in Figur 9 über den bestreffenden Längenabschnitt der Extruderschnecke aufgetragen, und zwar als ausgezogene Linie wobei die Fließrichtung von rechts nach links ist. Vor der Zuführöffnung 4 im Extruderzylinder 20 besteht ein Druckmaximum. Aufgrund der Schneckengeometrie sinkt der Druck zur Zuführöffnung 4 hin vollständig, das heißt, auf Umgebungsdruck, ab.

Der ohne weiteren Eingriff zu erwartende Druckverlauf ist in Figur 9 als durchgezogene Linie dargestellt. Dabei zeigt sich, dass im gezeigten Idealfall zwar der Bereich der Zuführöffnung 4 drucklos ist. Bei eventuellen Prozessschwankungen ist aber nicht ausgeschlossen, dass sich das Druckniveau kurzzeitig anhebt, so dass unweigerlich Schmelze in die Zuführeinrichtung des Seitenaggregats 3 eindringt.

Daher werden in vier Teilabschnitten I bis IV fortwährend Druckmessungen durchgeführt. Mittels der Steuerungseinrichtung der Direktcompoundierungsvorrichtung wird ein Druckgradient berechnet und bis zu der Zuführöffnung 4 extrapoliert, wie durch die strichpunktierte Pfeillinie angedeutet. Prognostiziert das System einen Druck größer 1 bar in der Zuführöffnung 4, wird automatisch eine Senkung des Gegendrucks an einer Schneckenspitze 58 durch eine weitere Öffnung einer Bolzenverschlussdüse veranlasst, um ein Fluten des Systems zu verhindern.

Die mit der Faserwattierungsvorrichtung am Seitenaggregat 3 verbundene oder darin integrierte, gravimetrisch ausgeführte Dosiereinrichtung kann gegendruckunabhängig arbeiten. Da das als Einschneckenextruder ausgeführte Extrudermodul 2 aufgrund der teilgefüllten Dekompressionszone 54 nur drehzahl- und temperaturabhängig arbeitet, lässt sich eine Rezeptur für einen bestimmten Durchsatz des Einschneckenextruder gegendruckunabhängig einstellen.

Die Verfahrensführung ergibt sich wie folgt:
Zur Inline- bzw. Direktcompoundierung von mit Additiven gefüllten Thermoplasten, insbesondere von Polyamid, wird über den Einfülltrichter 22 thermoplastisches Kunststoffgranulat in den Extruderzylinder 20 gegeben und über die darin rotierend angetriebene Extruderschnecke 5 in Richtung der Zuführeinrichtung 140 im Seitenaggregat 3 gefördert. Im Bereich der Einzugszone 51 und der Kompressionszone 52 der Extruderschnecke 5 wird das Kunststoffgranulat aufgeschmolzen und gelangt in die Meteringzone 53, wo über das Scherteil 57 letzte Kunststoff-Feststoffanteile desagglomeriert und plastifiziert werden. Die Kunststoffschmelze gelangt nun in die Dekompressionszone 54, eine teilgefüllte Zone, in welcher eine Zuführung von Additiv in Form von wattierten Verstärkungsfasern durch die Zuführöffnung 4 des Seitenaggregats 3 erfolgt.

Das Additiv wird über die Faserwattierungsvorrichtung in den Doppelschneckenkanal 33 des Zuführzylinders 31 der Zuführungsvorrichtung 3 aufgegeben, wo es durch die beiden Schnecken 35 der dichtkämmenden Doppelförderschneckenanordnung mit engem Scherspalt in den Extruderzylinder 11 gefördert wird.

Während der Förderung wird das Additiv durch die gleichsinnig angetriebenen Schnecken 35 schonend desagglomeriert, bevor es in der teilgefüllten Dekompressionszone 54 in die Kunststoffschmelze gelangt. Zur Vermeidung von Oxidation wird während des gesamten Prozesses über den Inertgaseinlass 38 zur Überdruckbegasung Stickstoff mit einem Druck von maximal 3 bar bis 5 bar in den Doppelschneckenkanal 33 und damit in die teilgefüllte Zone des Extrudermoduls 1 eingebracht.

Die Kunststoffschmelze wird mit den eingebrachten Additiven sodann durch die Meteringzone 55 gefördert und in der Homogenisierungszone 56 homogenisiert. Zur schonenden Homogenisierung können tiefgeschnittene Rautenmischelemente oder Sondermischelemente an der Extruderschnecke 5 angeordnet sein. Als Sondermischelemente kommen rückläufige Mischelemente mit Stegdurchbrüchen in Frage. Sinnvoll ist der Einsatz von acht bis zehn Durchbrüchen pro Umdrehung mit einem resultierenden Bogenmaß von Pi als projizierte Fläche.

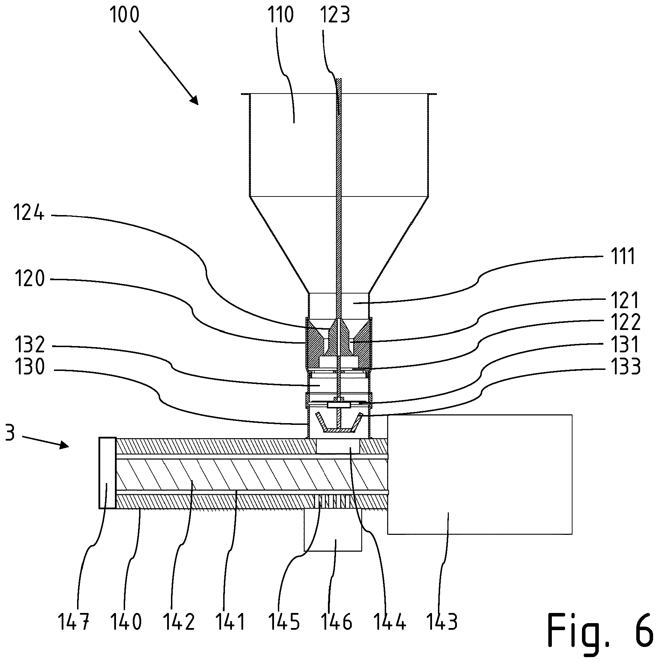

Figur 6 zeigt im Schnitt den Aufbau des Seitenaggregats 3 mit der Faserwattierungsvorrichtung 100, die zur Aufbereitung der Fasern vor dem Einmischen in die thermoplastische Kunststoffschmelze dient. Die Faserwattierungsvorrichtung 100 besteht im Wesentlichen aus:
- einem Trichter 110, der sich zu einer unten gelegenen Trichteröffnung 11 verjüngt;
- einer Mühleneinheit 120;
- einer Puffereinheit 130 und
- der Zuführeinheit 140.

Die Mühleneinheit 120 befindet sich unmittelbar unter der Trichteröffnung 111. Sie besitzt ein Gehäuse, in dem ein Ringspalt 121 ausgebildet ist. In dessen Zentrum ist ein Lager 124 für eine Antriebswelle 123 vorgesehen. Unmittelbar unterhalb des Ringspalts 121 befindet sich ein in einem Wattierungsraum 126 rotierendes Messerelement 122, das über die Antriebswelle 123 angetrieben ist.

Unterhalb der Mühleneinheit 120 ist eine Puffereinheit 130 mit einem Pufferspeicher 132 vorgesehen, der in dem dargestellten Ausführungsbeispiel als ein zylindrischer Raum ausgebildet ist, der in etwa den gleichen Durchmesser besitzt, wie die Trichteröffnung 11 und der Wattierungsraum 126 der Mühleneinheit 120 darüber. Der Wattierungsraum 126 ist nach unten durch ein Sperrschieberelement 131 gegenüber dem darunter liegenden Pufferspeicher 132 verschließbar. Das Sperrschieberelement 131 ist über einen weiteren, hier nicht dargestellten Stellmotor beweglich. Über das geöffnete Sperrschieberelement 131 können Faserbüschel aus dem Wattierungsraum 126 nach unten in den Pufferspeicher 132 abgegeben werden, bevor der Wattierungsraum 126 dann wieder nach unten hin verschlossen wird, um darin erneut Faserwatte zu erzeugen.

In dem Pufferspeicher 132 ist ein Rührerelement 133 angeordnet. Dieses dient im Wesentlichen dazu, die im Pufferspeicher 132 vorhandene Menge an Faserwatte über den Querschnitt einer Zufuhröffnung 144 der Zuführeinheit 140 gleichmäßig zu verteilen und sie weiter schonend zu wattieren. Das Rührerelement 133 wird durch die Antriebsachse 123 mit angetrieben, wobei zur Drehzahlentkopplung dazwischen ein Getriebe 134 vorgesehen ist.

Die Zuführeinheit 140 ist im dargestellten Ausführungsbeispiel als ein Doppelschneckenpaar mit zwei Schneckenwellen 142 gebildet, die über eine Motor- und Getriebeeinheit 143 gleichsinnig angetrieben sind. Die in dem Austragskanal 141 angeordneten Schneckenwellen 142 füllen den Querschnitt des Austragskanals 141 im Wesentlichen aus, ohne dass jedoch eine Wandberührung stattfindet. Der Luftspalt zwischen den Außenkanten der Schneckenstege der Schneckenwellen 142 und der Innenwandung des Austragskanals 141 sollte mindestens 0,05 Millimeter betragen.

Die bevorzugte Ausführungsform der Faserwattierungsvorrichtung 100, die in Figur 6 dargestellt ist, sieht außerdem eine Ansaugeinheit 146 vor, welche über eine Entlüftungsöffnung 145 mit dem Austragskanal 141 in Verbindung steht. Die Entlüftungsöffnung 145 befindet sich unterhalb der Zufuhröffnung 144, sodass über die Ansaugeinheit 146 ein saugender Luftstrom erzeugbar ist, der auf den Pufferspeicher 132 wirkt, in welchem das Rührerelement 133 angeordnet ist. Während der Sperrschieber 131 geöffnet ist, wirkt der Luftstrom außerdem direkt auf den Inhalt des Wattierungsraums 126.

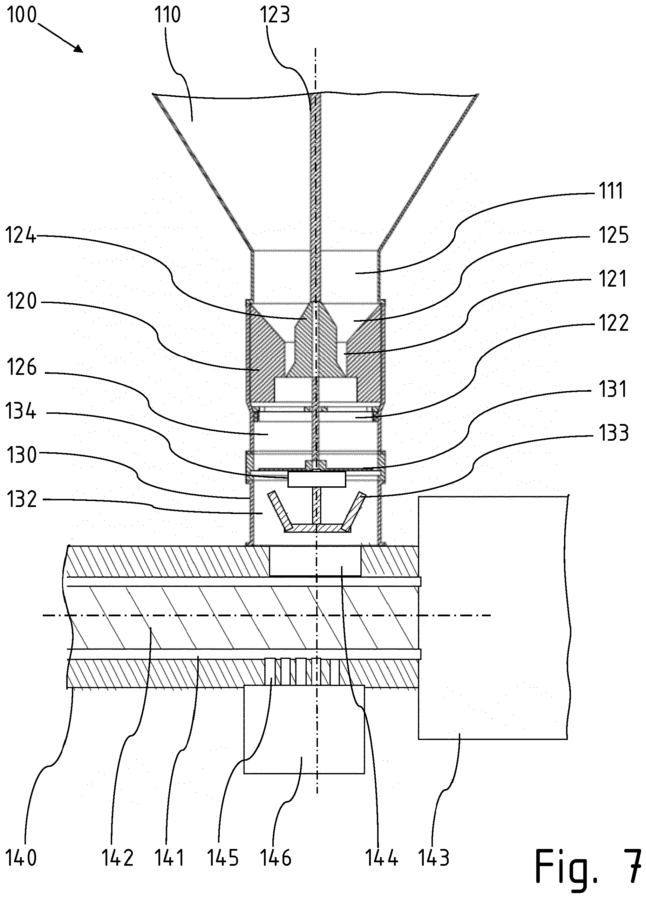

Die Funktion der Faserwattierungsvorrichtung 100 nach der Erfindung wird mit Bezug auf die vergrößerte Ausschnittsdarstellung in Figur 7 erläutert:
In den Trichter 110 werden trockene Verstärkungsfasern wie beispielsweise Glasfasern in Bündelform eingelegt. Diese rutschen nach unten in die Trichteröffnung 11 und von dort in den konisch zulaufenden Ringspalt 121 der Mühleneinheit 120. Die Verteilung der Verstärkungsfasern auf den Ringspalt ergibt sich im oberen Teil bereits durch die rotierende Antriebswelle 123, welche sich durch das Zentrum des Trichters 110 erstreckt. Beim Eintritt in die Mühleneinheit 120 wird durch deren Trichteröffnung 125 an der Außenseite und durch eine Kegelform einer Lagereinheit 124 für die Antriebswelle 123 im Zentrum bewirkt, dass die Verstärkungsfasern gerichtet und vereinzelt in den Ringspalt 121 gelangen. Die in den Trichter 110 eingefügten Faserbüschel bewegen sich allein aufgrund ihrer Masse, also ohne äußere Zwangskräfte, zur Mühleneinheit 120 und werden dort kraftschlüssig in den Spalt eingezogen. Die Variierung des Spaltes zwischen Mühleneinheit 120 und Zylinderwand ermöglicht die Adaptierung für verschiedene Faserdurchmesser.

Unterhalb des Ringspalts 121 rotiert das Messerelement 122. Die aus dem Ringspalt 121 herausragenden Faserenden werden vom Messerelement 122 erfasst und fallen in den darunter befindlichen Wattierungsraum 126. Schon aufgrund der Rotation des Messerelements 122 und des damit erzeugten Luftstroms kommt es zu Verwirbelungen der Verstärkungsfasern, die sich aneinander anlegen und ein gespinstartiges bzw. watteförmiges Gebilde aus Verstärkungsfasern entstehen lassen.

Der Sperrschieber 131, welcher den Boden des Pufferspeichers 132 bildet, bleibt über eine bestimmte Zeitdauer geschlossen, während derer die Vereinzelung aus dem Bündel heraus wie auch die Ansammlung und Verfilzung von vereinzelten Verstärkungsfasern ermöglicht wird, was in der Bildung der Verstärkungsfaserwatte resultiert. Nach Ablauf der voreingestellten Zeitdauer öffnet sich der Sperrschieber 131, wobei er sich vorzugsweise jedoch nicht vollständig öffnet und nicht den gesamten Querschnitt des Pufferspeichers 132 nach unten hin freigibt, sondern pro Hub nur von etwa 30% bis 50 % der Querschnittsfläche. Dadurch wird ermöglicht, dass Teile des erzeugten Faserbüschels herausfallen, dass aber zugleich Anteile in dem Wattierungsraum 126 erhalten bleiben, sodass sich der Wattierungsprozess weiter fortsetzen kann.

Damit ein Teil der erzeugten Faserwatte aus dem Pufferspeicher in die Zuführeinheit 140 übertragen werden kann, muss er abgezogen werden. Die Bindungen der einzelnen Verstärkungsfasern untereinander sind zwar für sich jeweils nicht besonders fest, führen in der Summe aber dazu, dass die Gewichtskraft allein nicht ausreicht, diese aus dem Pufferspeicher 132 zu entfernen. Hierzu wird der saugende Luftstrom eingesetzt, der von der Gebläseeinheit 146 aus durch die übereinanderliegenden Öffnungen 145 und 144 im Gehäuse der Zuführeinheit 140 direkt bis an den Sperrschieber 131 heran wirkt.

Das unterhalb des Sperrschiebers 131 angeordnete Rührerelement 133 bewirkt zusätzlich zum Luftstrom, dass aus dem halbgeöffneten Sperrschieber 131 austretende Faserbüschel direkt zur Seite weg gefördert werden. Die wesentliche Aufgabe des Rührerelements 133 besteht jedoch darin, die Faserbüschel in der Zuführöffnung 144 gleichmäßig zu verteilen und damit einen Einzug in den Spalt zwischen den beiden Schneckenwellen 142 zu forcieren. Die eingezogenen Faserbüschel werden dann über die Schneckenwellen 142 nach links abgefördert und einer weiteren Einrichtung zur direkten Weiterverarbeitung oder zur Verpackung zugeführt.

Figur 13 zeigt die drei bei der Faserwattierungsvorrichtung 100 getrennt steuerbaren Massenströme ṁ₁, ṁ₂, ṁ₃.

Ein Eingangsmassenstrom ṁ₁ wird durch die Drehzahl der Antriebswelle 123 in der Mühleneinheit 120 beeinflusst, wodurch zugleich auch die Drehzahl der Messerelemente 122 im Wattierungsraum 126 bestimmt ist. Der Eingangsmassenstrom ṁ₁ kann gravimetrisch bestimmt werden, z. B. durch Wiegezellen am Trichterelement 110 oder am Übergang zwischen den Einheiten 110, 120 und 130 der Faserwattierungsvorrichtung 100 und der Zuführeinheit 140.

Ein Ausgangsmassenstrom ṁ₃ wird bei gegebener Geometrie der Schneckenwellen 142 allein durch deren Drehzahl bestimmt. Er kann durch eine der Faserwattierungsvorrichtung 100 nachgeschaltete gravimetrische Einrichtung wie einen weiteren Dosiertrichter gemessen werden.

Der Eingangsmassenstrom ṁ₁ und der Ausgangsmassenstrom ṁ₃ müssen synchronisiert werden. Dadurch wird das Leerlaufen wie das Verstopfen des Wattierungsraums 126 vermieden.

Dadurch, dass ein über den Sperrschieber 131 verschließbarer Pufferraum 132 vorgesehen ist, kann ein Zwischenmassenstrom ṁ₂ gesteuert werden, und zwar durch das periodische Öffnen und Schließen des Sperrschiebers 131. Der Zwischenmassenstrom ṁ₂ ergibt sich als Funktion von Hubfrequenz und Hubweite des Sperrschiebers 131 an der Austragsöffnung. Diese Parameter können in gewissen zeitlichen Grenzen allein von der Abhängigkeit von einem lokal beobachten Füllgrad in der Wattierungskammer geregelt werden, wobei diesem übergeordnet eine Synchronisierung mit dem Eingangsmassenstrom ṁ₁ und/oder dem Ausgangsmassenstrom ṁ₃ erforderlich ist.

## Patentansprüche

1. Verfahren zur Direktcompoundierung faserverstärkter Verbundwerkstoffe für die Herstellung von Kunststoffformteilen oder -profilsträngen, mit wenigstens folgenden Schritten:
- Aufschmelzen und Plastifizieren von Kunststoff in einem Extrudermodul (2) mit einem Extruderzylinder (20) und einer darin rotierenden Extruderschnecke (5) zur Erzeugung einer Kunststoffschmelze;
- Zuführen von Verstärkungsfasern mittels einer Zuführeinheit (140) an einer Zuführöffnung (4) im Extruderzylinder (20);
- Vermischen der Kunststoffschmelze und der Verstärkungsfasern zu einem Compound;
- Weiterverarbeiten der mit den Verstärkungsfasern durchmischten Kunststoffschmelze zu einem Formteil durch Einspritzen mittels einer Einspritzdüse (207) in wenigstens ein Formnest eines Werkzeugs oder zu einem Profilstrang mittels Extrusion durch wenigstens ein Düsenwerkzeug,
**dadurch gekennzeichnet,**
- **dass** die Verstärkungsfasern in einer mit der Zuführeinheit (140) verbundenen Faserwattierungsvorrichtung (100) zu einer Faserwatte aufbereitet werden und
- **dass** die Faserwatte der Kunststoffschmelze in einer teilgefüllten und drucklosen Dekompressionszone (54) im Extrudermodul (2) zugeführt wird.

2. Verfahren nach Anspruch 1, **dadurch gekennzeichnet, dass** die Faserwatte erzeugt wird durch:
a) Aufgeben einer Menge von losen Verstärkungsfasern und/oder von abgeschlagenen Rovingabschnitten von Verstärkungsfasern in einen Trichter (110), der an seiner Unterseite eine Trichteröffnung (111) besitzt;
b) Bildung einer Verstärkungsfaser-Watte durch:
- Vereinzelung der aus der Trichteröffnung (111) austretenden losen Verstärkungsfasern und/oder der Rovingabschnitte;
- und/oder Verbindung von Verstärkungsfasern durch Verwirbelung mittels eines Messerelements (122) und/oder eines rotierenden Verwirbelungselements, das unterhalb der Trichteröffnung (110) in einem Wattierungsraum (126) rotiert.

3. Verfahren nach Anspruch 2, **gekennzeichnet durch** folgende weitere Schritte:
c) Periodische Überführung der Verstärkungsfaser-Watte aus dem Wattierungsraum (126) in einen Pufferspeicher (132) **durch** periodische Öffnung eines dazwischen angeordneten Sperrschiebers (131) und
d) Austragen der Verstärkungsfaser-Watte aus dem Pufferspeicher (132) mittels eines Luftstroms.

4. Verfahren nach Anspruch 3, **dadurch gekennzeichnet, dass** unterhalb einer Austragsöffnung des Pufferspeichers (132) ein Austragskanal (141) angeordnet ist, durch welchen hindurch ein Luftstrom auf die Austragsöffnung des Pufferspeichers (132) wirkt.

5. Verfahren nach Anspruch 4, **dadurch gekennzeichnet, dass** die Verstärkungsfaser-Watte über ein Paar gleichsinnig rotierender Stopfschneckenwellen (142) ausgetragen wird, die in dem Austragskanal (141) angeordnet sind, wobei die Verstärkungsfaser-Watte mittels des Luftstroms in einen Einzugsspalt zwischen den Stopfschneckenwellen (142) gefördert wird.

6. Verfahren nach Anspruch 4 oder 5, **dadurch gekennzeichnet, dass** die Verstärkungsfaser-Watte mittels eines innerhalb des Pufferspeichers (132) rotierenden Rührelements (133) auf dem Einzugsspalt der Stopfschneckenwellen (142) verteilt wird.

7. Verfahren nach einem der Ansprüche 1 bis 6, **dadurch gekennzeichnet, dass**
- die Drehzahl des Messerelements (122),
- die Hubfrequenz des Sperrschiebers (131) und/oder der über den Hub veränderliche Öffnungsquerschnitt sowie
- die Drehzahl der Stopfschneckenwellen (142) oder der Hub und die Hubfrequenz des Stopfkolbens
derart geregelt sind, dass ein Eingangsmassenstrom *ṁ*₁ am Trichter (110) einem Ausgangsmassenstrom *ṁ*₃ am Ende des Ausgangskanals (141) entspricht.

8. Direktcompoundierungsvorrichtung (201) für die Herstellung von Kunststoffformteilen oder -profilsträngen aus faserverstärkten Verbundwerkstoffen,
mit einer einen Extrusionszylinder (20) und eine in diesem um eine Längsachse drehbar angeordnete Extruderschnecke (5) aufweisenden Plastifizierungseinrichtung, und mit einer in dem Extrusionszylinder (20) mündenden Zuführeinrichtung (140) für Fasermaterial;
wobei an der Extruderschnecke (5) im Bereich der in den Extrusionszylinder (20) mündenden Zuführeinrichtung (140) für das Fasermaterial eine Dekompressionszone (54) ausgebildet ist;
**dadurch gekennzeichnet, dass** die Zuführeinheit (140) eine Faserwattierungsvorrichtung (100) umfasst mit wenigstens:
- einem Trichter (110), der an seiner Unterseite eine Trichteröffnung (111) besitzt und
- einer Mühleneinheit (120) mit wenigstens einem unterhalb der Trichteröffnung (111) rotierenden Messerelement (122) und/oder ein Verwirbelungselement.

9. Direktcompoundierungsvorrichtung (201) nach Anspruch 8, **dadurch gekennzeichnet, dass** unterhalb des Messerelements (122) ein Pufferspeicher (132) vorgesehen ist, unter dem ein motorisch bewegbarer Sperrschieber (131) angeordnet ist und dass wenigstens ein Luftgebläse (46) mit einer auf den Pufferspeicher (32) wirkenden Druckleitung und/oder Saugleitung vorgesehen ist.

10. Direktcompoundierungsvorrichtung (201) nach Anspruch 9, **dadurch gekennzeichnet, dass** zwischen einer Austragsöffnung des Pufferspeichers (132) und der Zuführöffnung (144) am Austragskanal (141) ein rotierbares Rührelement (133) angeordnet ist.

11. Direktcompoundierungsvorrichtung (201) nach Anspruch 10, **dadurch gekennzeichnet, dass** das Messerelement (122) und/oder das Verwirbelungselement sowie das Rührelement über eine gemeinsame Antriebswelle (123) angetrieben und über ein zwischen ihnen angeordnetes Getriebe (134) voneinander drehzahlentkoppelt sind.

12. Direktcompoundierungsvorrichtung (201) nach einem der Ansprüche 8 bis 11, **dadurch gekennzeichnet, dass** in der Trichteröffnung (111) und/oder in der Mühleneinheit (120) ein sich in Fallrichtung verjüngender Ringspalt (121) ausgebildet ist, in dessen Zentrum ein Lagerelement (124) für eine mit dem Messerelement (122) und/ oder dem Verwirbelungselement verbundene Antriebswelle (123) angeordnet ist.

13. Direktcompoundierungsvorrichtung (201) nach einem der Ansprüche 9 bis 12, **dadurch gekennzeichnet:**
- **dass** unterhalb einer Austragsöffnung des Pufferspeichers (132) ein quer zur Fallrichtung der Verstärkungsfaser-Watte ausgerichteter Austragskanal (141) mit einer Auslassöffnung (144) angeordnet ist und
- **dass** eine Ansaugöffnung (145) des Luftgebläses (146) auf der der Auslassöffnung (144) des Pufferspeichers (132) gegenüberliegenden Seite des Austragskanals (141) angeordnet ist.

14. Direktcompoundierungsvorrichtung (201) nach einem der Ansprüche 8 bis 13, **gekennzeichnet durch** eine Einspritzeinrichtung mit wenigstens zwei Kolbenspritzeinheiten (203, 204), deren Kolbenzylinder zur wechselnden Beschickung mit plastifizierter Kunststoffmasse über eine Umstelleinrichtung (208) mit der Plastifizierungseinrichtung verbunden sind, wobei die wenigstens zwei Kolbenspritzeinheiten (203, 204) über eine gemeinsame Austragsleitung mit einer Einspritzdüse (207) verbunden sind und wobei in den Verbindungen der Kolbenspritzeinheiten (203, 204) mit der gemeinsamen Austragsleitung jeweils ein Absperrventil (205, 206) angeordnet ist.

15. Direktcompoundierungsvorrichtung (201) nach einem der Ansprüche 8 bis 14, **dadurch gekennzeichnet, dass** die Umstelleinrichtung (208) über eine Zulaufleitung mit der Extrudereinheit (2) und über je eine Ablaufleitung mit den Kolbenspritzeinheiten (203, 204) verbunden ist, wobei in der Zulaufleitung sowie in den Ablaufleitungen jeweils ein Ventil (205, 206) angeordnet ist, und dass die Ventile der Umstelleinrichtung (208) sowie die Absperrventile (205, 206) der Kolbenspritzeinheiten (203, 204) mit einer Steuerung verbunden sind, die derart eingerichtet ist, dass durch wechselseitige Ansteuerung der Ventile (205, 206, 208) ein kontinuierlicher Kunststoffmasse-Volumenstrom durch die Zulaufleitung bewirkt ist.

## Claims

1. Method for the direct compounding of fibre-reinforced composite materials for the production of plastics mouldings or profile strands, comprising at least the following steps of:
- melting and plasticizing plastic in an extruder module (2) comprising an extruder cylinder (20) and an extruder screw (5) rotating therein for production of a plastics melt;
- supplying reinforcing fibres to a supply opening (4) in the extruder cylinder (20) by means of a supply unit (140);
- mixing the plastics melt and the reinforcing fibres to form a compound;
- further processing the plastics melt mixed with the reinforcing fibres to form a moulding by injection into at least one mould cavity of a tool by means of an injection nozzle (207) or to form a profile strand by means of extrusion by at least one nozzle tool,
**characterized**
- **in that** the reinforcing fibres are processed in a fibre-wadding apparatus (100) connected to the supply unit (140) to form a fibre wadding, and
- **in that** the fibre wadding is supplied to the plastics melt in a partially filled and pressureless decompression zone (54) in the extruder module (2).

2. Method according to Claim 1, **characterized in that** the fibre wadding is produced by:
a) dispensing of a quantity of loose reinforcing fibres and/or of chopped roving portions of reinforcing fibres into a hopper (110) which has a hopper opening (111) on its lower side;
b) formation of a reinforcing fibre wadding by:
- separation of the loose reinforcing fibres exiting the hopper opening (111) and/or of the roving portions;
- and/or bonding of reinforcing fibres by swirling by means of a knife element (122) and/or a rotating swirl element which rotates below the hopper opening (110) in a wadding chamber (126).

3. Method according to Claim 2, **characterized by** the following further steps of:
c) periodically transferring the reinforcing fibre wadding from the wadding chamber (126) into a buffer store (132) by periodic opening of a blocking slide (131) arranged therebetween, and
d) discharging the reinforcing fibre wadding from the buffer store (132) by means of an air flow.

4. Method according to Claim 3, **characterized in that** arranged below a discharge opening of the buffer store (132) is a discharge channel (141) through which an air flow acts on the discharge opening of the buffer store (132).

5. Method according to Claim 4, **characterized in that** the reinforcing fibre wadding is discharged via a pair of stuffing screw shafts (142) which rotate in the same direction and which are arranged in the discharge channel (141), wherein the reinforcing fibre wadding is conveyed into a draw-in gap between the stuffing screw shafts (142) by means of the air flow.

6. Method according to Claim 4 or 5, **characterized in that** the reinforcing fibre wadding is distributed on the draw-in gap of the stuffing screw shafts (142) by means of a stirring element (133) rotating within the buffer store (132).

7. Method according to one of Claims 1 to 6, **characterized in that**
- the rotational speed of the knife element (122),
- the stroke frequency of the blocking slide (131) and/or the opening cross section, which is variable over the stroke, and
- the rotational speed of the stuffing screw shafts (142) or the stroke and the stroke frequency of the stuffing ram
are controlled in such a way that an input mass flow *ṁ*₁ at the hopper (110) corresponds to an output mass flow *ṁ*₃ at the end of the discharge channel (141).

8. Direct compounding apparatus (201) for the production of plastics mouldings or profile strands from fibre-reinforced composite materials, comprising a plasticization device having an extrusion cylinder (20) and an extruder screw (5) which is arranged in said extrusion cylinder so as to be able to rotate about a longitudinal axis, and comprising a supply device (140) for fibre material, said supply device leading to the extrusion cylinder (20) ;
wherein a decompression zone (54) is formed on the extruder screw (5) in the region of the supply device (140) for the fibre material, said supply device leading into the extrusion cylinder (20);
**characterized in that** the supply unit (140) comprises a fibre-wadding apparatus (100) comprising at least:
- a hopper (110) which has a hopper opening (111) on its lower side, and
- a mill unit (120) comprising at least one knife element (122) rotating below the hopper opening (111) and/or a swirl element.

9. Direct compounding apparatus (201) according to Claim 8, **characterized in that** a buffer store (132) is provided below the knife element (122), a blocking slide (131) which is movable by motor being arranged under said buffer store, and **in that** at least one air blower (46) with a pressure line and/or suction line acting on the buffer store (32) is provided.

10. Direct compounding apparatus (201) according to Claim 9, **characterized in that** a rotatable stirring element (133) is arranged between a discharge opening of the buffer store (132) and the supply opening (144) to the discharge channel (141).

11. Direct compounding apparatus (201) according to Claim 10, **characterized in that** the knife element (122) and/or the swirl element and the stirring element are driven via a common drive shaft (123) and are decoupled from one another in terms of rotational speed by way of a gear mechanism (134) arranged between them.

12. Direct compounding apparatus (201) according to one of Claims 8 to 11, **characterized in that** an annular gap (121) tapering in a fall direction is formed in the hopper opening (111) and/or in the mill unit (120), a bearing element (124) for a drive shaft (123) connected to the knife element (122) and/or to the swirl element being arranged in the centre of said annular gap.

13. Direct compounding apparatus (201) according to one of Claims 9 to 12, **characterized:**
- **in that** a discharge channel (141) which is oriented transversely with respect to the fall direction of the reinforcing fibre wadding and which has an outlet opening (144) is arranged below a discharge opening of the buffer store (132), and
- **in that** an intake opening (145) of the air blower (146) is arranged on that side of the discharge channel (141) which lies opposite the outlet opening (144) of the buffer store (132).

14. Direct compounding apparatus (201) according to one of Claims 8 to 13, **characterized by** an injection device comprising at least two ram-type injection units (203, 204) whose ram cylinders are connected to the plasticization device via a changeover device (208) for alternating loading with plasticized plastics mass, wherein the at least two ram-type injection units (203, 204) are connected to an injection nozzle (207) via a common discharge line and wherein a respective shut-off valve (205, 206) is arranged in the connections between the ram-type injection units (203, 204) and the common discharge line.

15. Direct compounding apparatus (201) according to one of Claims 8 to 14, **characterized in that** the changeover device (208) is connected to the extruder unit (2) via an inflow line and to the ram-type injection units (203, 204) via a respective outflow line, wherein a respective valve (205, 206) is arranged in the inflow line and in the outflow lines, and **in that** the valves of the changeover device (208) and the shut-off valves (205, 206) of the ram-type injection units (203, 204) are connected to a controller which is configured in such a way that a continuous volumetric flow of plastics mass through the inflow line is effected by alternating actuation of the valves (205, 206, 208) .

## Revendications

1. Procédé de compoundage direct de matériaux composites renforcés par des fibres pour la fabrication de pièces moulées ou de boudins profilés en matière plastique, comprenant au moins les étapes suivantes :
- la fusion et la plastification de matière plastique dans un module d'extrudeuse (2) muni d'un cylindre d'extrudeuse (20) et d'une vis d'extrudeuse (5) en rotation dans celui-ci pour la production d'une masse fondue de matière plastique ;
- l'introduction de fibres de renforcement au moyen d'une unité d'introduction (140) au niveau d'une ouverture d'introduction (4) dans le cylindre d'extrudeuse (20) ;
- le mélange de la masse fondue de matière plastique et des fibres de renforcement en un compound ;
- la transformation de la masse fondue de matière plastique mélangée avec les fibres de renforcement en une pièce moulée par injection au moyen d'une buse d'injection (207) dans au moins une cavité de moulage d'un outil ou en un boudin profilé au moyen d'une extrusion à travers au moins un outil à buse, **caractérisé en ce que**
- les fibres de renforcement sont préparées en une nappe de fibres dans un dispositif de nappage de fibres (100) raccordé à l'unité d'introduction (140), et
- la nappe de fibres est introduite dans la masse fondue de matière plastique dans une zone de décompression (54) partiellement remplie et sans pression dans le module d'extrudeuse (2).

2. Procédé selon la revendication 1, **caractérisé en ce que** la nappe de fibres est produite par :
a) introduction d'une quantité de fibres de renforcement lâches et/ou de sections de stratifil détachées de fibres de renforcement dans une trémie (110), qui présente une ouverture de trémie (111) sur son côté inférieur ;
b) la formation d'une nappe de fibres de renforcement par :
- l'individualisation des fibres de renforcement lâches et/ou des sections de stratifil sortant de l'ouverture de trémie (111) ;
- et/ou la liaison de fibres de renforcement par tourbillonnement au moyen d'un élément lame (122) et/ou d'un élément de tourbillonnement rotatif, qui est mis en rotation en dessous de l'ouverture de trémie (110) dans un espace de nappage (126).

3. Procédé selon la revendication 2, **caractérisé par** les étapes supplémentaires suivantes :
c) le transfert périodique de la nappe de fibres de renforcement de l'espace de nappage (126) dans un réservoir tampon (132) par ouverture périodique d'un coulisseau d'arrêt (131) agencé entre eux, et
d) le déchargement de la nappe de fibres de renforcement du réservoir tampon (132) au moyen d'un courant d'air.

4. Procédé selon la revendication 3, **caractérisé en ce qu'**un canal de déchargement (141) est agencé en dessous d'une ouverture de déchargement du réservoir tampon (132), à travers lequel un courant d'air agit sur l'ouverture de déchargement du réservoir tampon (132) .

5. Procédé selon la revendication 4, **caractérisé en ce que** la nappe de fibres de renforcement est déchargée par l'intermédiaire d'une paire d'arbres de vis de gavage (142) en rotation dans le même sens, qui sont agencés dans le canal de déchargement (141), la nappe de fibres de renforcement étant transportée au moyen du courant d'air dans une fente d'alimentation entre les arbres de vis de gavage (142).

6. Procédé selon la revendication 4 ou 5, **caractérisé en ce que** la nappe de fibres de renforcement est répartie sur la fente d'alimentation des arbres de vis de gavage (142) au moyen d'un élément d'agitation (133) en rotation à l'intérieur du réservoir tampon (132).

7. Procédé selon l'une quelconque des revendications 1 à 6, **caractérisé en ce que**
- la vitesse de rotation de l'élément lame (122),
- la fréquence de course du coulisseau d'arrêt (131) et/ou la section transversale d'ouverture modifiable par l'intermédiaire de la course, ainsi que
- la vitesse de rotation des arbres de vis de gavage (142) ou la course et la fréquence de course du piston de gavage
sont régulées de telle sorte qu'un courant massique d'entrée *ṁ*₁ au niveau de la trémie (110) corresponde à un courant massique de sortie *ṁ*₃ à l'extrémité du canal de sortie (141).

8. Dispositif de compoundage direct (201) pour la fabrication de pièces moulées ou de boudins profilés en matière plastique à partir de matériaux composites renforcés par des fibres,
muni d'un appareil de plastification comprenant un cylindre d'extrusion (20) et une vis d'extrudeuse (5) agencée de manière rotative autour d'un axe longitudinal dans celui-ci, et muni d'un appareil d'introduction (140) pour du matériau fibreux, débouchant dans le cylindre d'extrusion (20) ;
une zone de décompression (54) étant formée au niveau de la vis d'extrudeuse (5) dans la zone de l'appareil d'introduction (140) pour le matériau fibreux débouchant dans le cylindre d'extrusion (20) ; **caractérisé en ce que** l'unité d'introduction (140) comporte un dispositif de nappage de fibres (100), muni d'au moins :
- une trémie (110), qui présente une ouverture de trémie (111) sur son côté inférieur, et
- une unité de broyage (120) munie d'au moins un élément lame (122) en rotation en dessous de l'ouverture de trémie (111) et/ou d'un élément de tourbillonnement.

9. Dispositif de compoundage direct (201) selon la revendication 8, **caractérisé en ce qu'**un réservoir tampon (132) est prévu en dessous de l'élément lame (122), sous lequel un coulisseau d'arrêt (131) déplaçable de manière motorisée est agencé, et **en ce qu'**au moins un ventilateur d'air (46) muni d'une conduite de refoulement et/ou d'une conduite d'aspiration agissant sur le réservoir tampon (32) est prévu.

10. Dispositif de compoundage direct (201) selon la revendication 9, **caractérisé en ce qu'**un élément d'agitation rotatif (133) est agencé entre l'ouverture de déchargement du réservoir tampon (132) et l'ouverture d'introduction (144) sur le canal de déchargement (141).

11. Dispositif de compoundage direct (201) selon la revendication 10, **caractérisé en ce que** l'élément lame (122) et/ou l'élément de tourbillonnement, ainsi que l'élément d'agitation sont entraînés par l'intermédiaire d'un arbre d'entraînement commun (123) et sont découplés les uns des autres en termes de vitesse de rotation par l'intermédiaire d'une transmission (134) agencée entre eux.

12. Dispositif de compoundage direct (201) selon l'une quelconque des revendications 8 à 11, **caractérisé en ce qu'**une fente annulaire (121) s'effilant dans la direction de chute est formée dans l'ouverture de trémie (111) et/ou dans l'unité de broyage (120), au centre de laquelle un élément palier (124) pour un arbre d'entraînement (123) raccordé à l'élément lame (122) et/ou à l'élément de tourbillonnement est agencé.

13. Dispositif de compoundage direct (201) selon l'une quelconque des revendications 9 à 12, **caractérisé en ce que**
- un canal de déchargement (141) muni d'une ouverture de sortie (144), orienté perpendiculairement à la direction de chute de la nappe de fibres de renforcement, est agencé en dessous d'une ouverture de déchargement du réservoir tampon (132), et
- une ouverture d'aspiration (145) du ventilateur d'air (146) est agencée sur le côté du canal de déchargement (141) opposé à l'ouverture de sortie (144) du réservoir tampon (132).

14. Dispositif de compoundage direct (201) selon l'une quelconque des revendications 8 à 13, **caractérisé par** un appareil d'injection muni d'au moins deux unités d'injection à piston (203, 204), dont les cylindres de piston sont raccordés à l'appareil de plastification par l'intermédiaire d'un appareil de commutation (208) pour l'alimentation alternée avec une masse de matière plastique plastifiée, les au moins deux unités d'injection à piston (203, 204) étant raccordées à une buse d'injection (207) par l'intermédiaire d'une conduite de déchargement commune, et une soupape d'arrêt (205, 206) étant agencée à chaque fois dans les raccordements des unités d'injection à piston (203, 204) avec la conduite de déchargement commune.

15. Dispositif de compoundage direct (201) selon l'une quelconque des revendications 8 à 14, **caractérisé en ce que** l'appareil de commutation (208) est raccordé par l'intermédiaire d'une conduite d'arrivée avec l'unité d'extrudeuse (2) et par l'intermédiaire à chaque fois d'une conduite d'évacuation avec les unités d'injection à piston (203, 204), une soupape (205, 206) étant agencée à chaque fois dans la conduite d'arrivée, ainsi que dans les conduites d'évacuation, et **en ce que** les soupapes de l'appareil de commutation (208), ainsi que les soupapes d'arrêt (205, 206) des unités d'injection à piston (203, 204) sont raccordées avec une commande, qui est conçue pour produire un courant volumique de masse de matière plastique continu à travers la conduite d'arrivée par commande alternée des soupapes (205, 206, 208).
